Europäisches Patentamt

European Patent Office

Office européen des brevets

(11) Veröffentlichungsnummer: **0 239 560**
A1

(12) **EUROPÄISCHE PATENTANMELDUNG**

(21) Anmeldenummer: 87890044.8

(22) Anmeldetag: 09.03.87

(51) Int. Cl.⁴: **F 02 G 3/02**, F 02 B 25/12, F 02 B 33/22, F 02 B 29/00

(30) Priorität: 17.03.86 AT 707/86

(43) Veröffentlichungstag der Anmeldung: 30.09.87
Patentblatt 87/40

(84) Benannte Vertragsstaaten: BE CH DE ES FR GB IT LI NL SE

(71) Anmelder: Brücker, Helmut G., Dr.,
Teistlergutstrasse 9/1/6, A-4040 Linz (Oberösterreich) (AT)
Anmelder: Zeman, Gerhard, Gänsbichistrasse 5,
A-5400 Hallein (Salzburg) (AT)

(72) Erfinder: Brücker, Helmut G., Dr.,
Teistlergutstrasse 9/1/6, A-4040 Linz (AT)

(74) Vertreter: Beer, Manfred, Dipl.-Ing. et al, Patentanwälte
Dipl.-Ing. Otto Beer, Dipl.-Ing. Manfred Beer
Lindengasse 8, Postfach 462, A-1071 Wien (AT)

(54) **Regenerativ arbeitende Zweitakthubkolbenbrennkraftmaschine.**

(57) Bei einer regenerativ arbeitenden Zweitakthubkolbenbrennkraftmaschine mit wenigstens einem Arbeitszylinder ist dem Verbrennungszylinder (3) ein Ladezylinder (2) zugeordnet, der mit dem Verbrennungszylinder (3) über eine Verbindungsleitung (4) verbunden ist, in der ein Regenerator (1) vorgesehen ist. Die Kolben (6, 7) des Verbrennungszylinders (3) und des Ladezylinders (2) und bzw. deren Kurbelwellen (14, 23, 24) arbeiten zueinander um einen Winkel zwischen 30 und 90° phasenversetzt, wobei der Kolben (7) des Verbrennungszylinders (3) vorläuft.

EP 0 239 560 A1

Regenerativ arbeitende Zweitakthubkolbenbrennkraftmaschine

Die Erfindung betrifft eine regenerativ arbeitende Zweitakthubkolbenbrennkraftmaschine mit wenigstens einem Verbrennungszylinder (Arbeitszylinder), dem eine Zündvorrichtung und eine Anordnung zum Einspritzen von Kraftstoff zugeordnet ist und der über eine Verbindungsleitung, in der ein Regenerator vorgesehen, mit einem Ladezylinder verbunden ist, wobei die Kolben des Verbrennungszylinders und des Ladezylinders zueinander um einen Winkel zwischen 30 und 90° phasenversetzt arbeiten, wobei der Kolben des Verbrennungszylinders dem Kolben des Ladezylinders voreilt.

Im einzelnen betrifft die Erfindung eine regenerativ arbeitende Hubkolbenbrennkraftmaschine mit mindestens zwei operativ über einen Regenerator gekoppelten Zylindern, deren Hubkolben sich zueinander phasenverschoben bewegen, wobei einer der beiden Zylinder, nämlich der, der mit dem kühleren Ende des Regenerators verbunden ist, als Ladungswechsel-Kompressions- und Nachexpansionseinheit wirkt, wogegen der andere Zylinder, der mit dem heißen Ende des Regenerators verbunden ist, im wesentlichen zur Brennstoffaufbereitung dient bzw. als Verbrennungs-und Hauptexpansionseinheit arbeitet.

Bei bekannten regenerativ arbeitenden Brennkraftmaschinen ist der dem Kompressionsvolumen eines Zylinderraumes zugehörige Regenerator entweder als Kolbenaufsatz ausgebildet (GB-PS 640 410) bzw. wird der Regenerator koaxial zum Kolben über eine gesonderte Pleuelstangenverbindung phasenverschoben bewegt (GB-PS 761 122). In beiden Fällen ist einerseits die regenerativ nutzbare Abgasenergie gering, anderseits sind diese Verbrennungskraftmaschinen durch die zu bewegenden Regeneratormassen auf relativ niedrige Drehzahlen beschränkt.

Weiters sind regenerativ arbeitende Hubkolbenbrennkraftmaschinen bekannt, bei denen der Regenerator drehbar im Zylinderkopfbereich angeordnet ist und wahlweise mit seiner heißen oder seiner kalten Seite dem Zylinderraum zugekehrt ist (DE-AS 23 50 075 und 23 50 076). Bei dieser bekannten Anordnung wird zwar ein Teil der im Abgas befindlichen Wärmeenergie rückgewonnen, aber es treten Druckverluste am Ende des Arbeitstaktes in der Größenordnung der üblichen Zwei- bzw. Viertaktsysteme auf. Weiters ist eine rekuperativ arbeitende Hubkolbenbrennkraftmaschine mit mindestens zwei Zylindern bekannt, die nach einem sogenannten "modifizierten Ericsson-Zyklus" arbeitet, wobei ein Lade- bzw. Kompressionszylinder über einen rekuperativen Wärmetauscher und entsprechende Ventile mit einem Arbeitszylinder verbunden ist (US-PS 4 133 172). Die Vorteile dieses Systemes werden auf Kosten eines erheblichen konstruktiven Mehraufwandes bei der Wärmetauschereinheit bzw. bei der Ventilsteuerung erreicht.

Aus der US-PS 1 111 841 ist eine Verbrennungskraftmaschine gemäß dem Oberbegriff des Patentanspruches 1 bekannt. Die bekannte Verbrennungskraftmaschine besitzt einen Arbeitszylinder, eine Zündvorrichtung und eine Anordnung zum Einspritzen von Kraftstoff, durch die entweder vom Kompressor (Ladezylinder) zum Verbrennungszylinder geförderte Frischluft, Gas oder Öl eingespritzt wird oder ein Gas-Luft-Gemisch zugeführt werden kann.

Aus Fig. 1 der US-PS 1 111 841 und der dort eingezeichneten Relativlage zwischen Arbeitskolben und Ladekolben ergibt sich, daß der Arbeitskolben dem Ladekolben vorläuft.

Weiters ist zwischen dem Verbrennungszylinder und dem Ladezylinder der aus der US-PS 1 111 841 bekannten Verbrennungskraftmaschine eine Verbindungsleitung vorgesehen, in der ein Regenerator vorgesehen ist. Die Ladung erfolgt über die Verbindungsleitung und durch den Regenerator durch eine von einem Schieber gesteuerte Öffnung im Ladezylinder. Die heißen Abgase strömen durch die Verbindungsleitung und den Regenerator über einen Auspuff schiebergesteuert in's Freie.

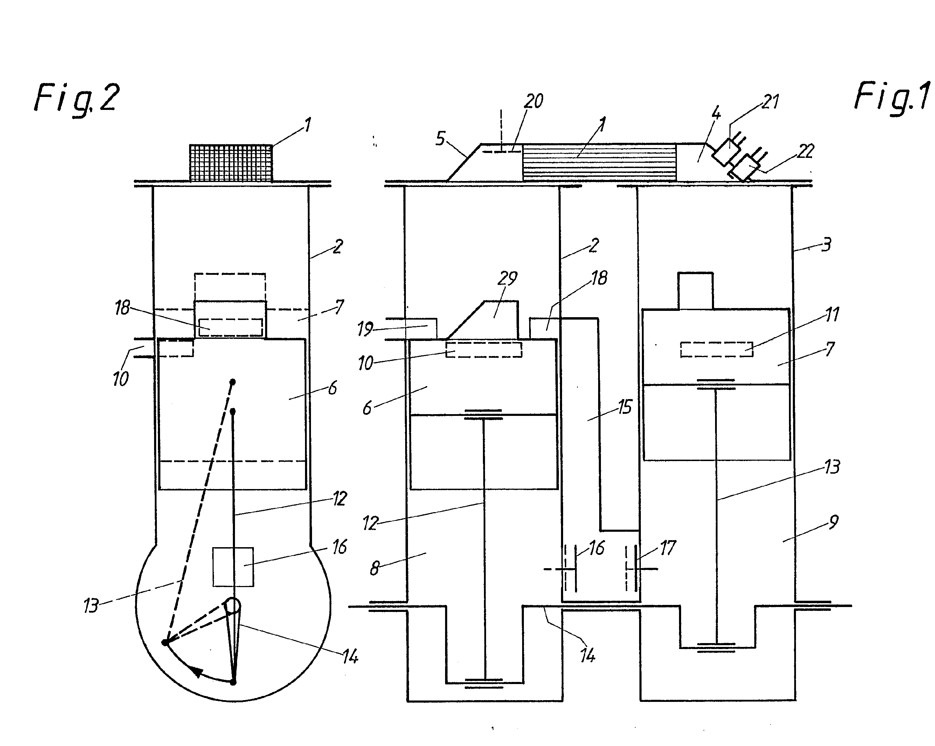

Eine Nachexpansion (=Rückexpansion) aus dem Verbrennungszylinder in den Ladezylinder und von dort in's Freie ist bei der US-PS 1 111 841 nicht möglich, da dort die Verbindungsleitung im Zeitpunkt des Abgasausstoßes durch den Schieber noch verschlossen ist (vgl. Lage gemäß Fig. 2).

Aus der DE-PS 614 347 ist es nicht bekannt, bei Verbrennungskraftmaschinen veränderliche Phasenversetzungen anzuwenden. Bei der DE-PS 614 347 wird nämlich lediglich die Kompression geändert, wobei der Phasenwinkel über $2\pi$ stets konstant bleibt (es sei denn, es würde während des Laufes des Motors die Einstellung ständig verändert). Eine automatische Veränderung ist nicht vorgesehen.

Der Erfindung liegt die Aufgabe zugrunde, mit relativ geringem konstruktivem Aufwand sowohl den Wirkungsgrad als auch die Schadstoffemission bei gleichzeitiger, weitestgehender Unempfindlichkeit des Motors gegenüber den verwendeten Brennstoffen zu verbessern.

Diese Aufgabe wird bei einer Brennkraftmaschine der eingangs genannten Gattung dadurch gelöst, daß der Ladezylinder über die Verbindungsleitung, in welcher der Regenerator vorgesehen ist, in jeder Stellung der Kolben mit dem Verbrennungszylinder verbunden ist, daß die Kurbelgehäuse von Ladezylinder und Verbrennungszylinder über von den Kolben gesteuerte Ansaugschlitze beim Durchgang der Kolben durch deren oberen Totpunkt mit Frischluft füllbar sind, daß beide Kurbelgehäuse in den Ladezylinder oberhalb des Kolbens in diesem entleerbar sind und daß im Ladezylinder vom Kolben in diesem gesteuerte Auslaßschlitze und/oder im Zylinderkopf des Ladezylinders ein Auslaßventil für das Ausstoßen der Abgase vorgesehen sind.

Bei der erfindungsgemäßen Ausbildung der Hubkolbenbrennkraftmaschine wird eine Wärmerückgewinnung mit hohem Wirkungsgrad durch den Regenerator gleichzeitig mit erheblichen anderen Vorteilen erreicht. So kann die Einspritzung des Brennstoffes bei Niederdruck erfolgen und der eingespritzte Brennstoff gelangt im Verbrennungszylinder in warmes Abgas, dem erst später die zur Verbrennung nötige Luft über den Ladezylinder, vorgewärmt durch den Regenerator, zugeführt wird, worauf die Zündung, beispielsweise mit Hilfe einer herkömmlichen Zündkerze erfolgt.

Durch die erfindungsgemäße Konstruktion der Brennkraftmaschine ergibt sich einmal die Möglichkeit einer Nachexpansion, d.h. die verbrannten Gase können, wenn der im Verbrennungszylinder enthaltene Kolben seinen unteren Totpunkt erreicht hat, noch in den Ladezylinder expandieren, da sich der in diesem Zylinder enthaltene Kolben noch auf seinem Weg nach unten befindet.

Ein weiterer Vorteil des erfindungsgemäßen Motors besteht darin, daß sich im Verbrennungszylinder beim Verdichtungshub lediglich verbrannte Abgase befinden, so daß der für den nächsten Arbeitshub benötigte Brennstoff in diese Arbeitsgase, beispielsweise durch Einspritzdüse, eingebracht werden kann, worauf später vom Ladezylinder vorverdichtete und vom Regenerator erwärmte Verbrennungsluft zugeführt und im Anschluß daran die Zündung ausgelöst wird. Diese Möglichkeiten ergeben weiters die weiter oben geschilderten Vorteile, die bei den Brennkraftmaschinen des Standes der Technik nicht verwirklicht sind.

Weitere Einzelheiten und Merkmale der Erfindung ergeben sich aus den Unteransprüchen sowie der nachfolgenden Beschreibung zweier Ausführungsbeispiele an Hand der angeschlossenen Zeichnungen. Es zeigt

Fig. 1 schematisch in Seitenansicht eine erste Ausfüh-rungsform einer regenerativ arbeitenden Zweitakthubkol-

benbrennkraftmaschine,

Fig. 2 die Brennkraftmaschine aus Fig. 1 von der Ladezylinderseite aus gesehen,

Fig. 3 in Seitenansicht eine zweite Ausführungsform einer Brennkraftmaschine und

Fig. 4 die Brennkraftmaschine aus Fig. 3 von der Ladezylindezylinderseite aus gesehen.

Die in den Fig. 1 und 2 gezeigte Hubkolbenbrennkraftmaschine besitzt zwei über einen Regenerator 1 gekoppelte Zylinder 2 und 3, wobei sich der Regenerator in einer Leitung 4 befindet, welche die Zylinder 2 und 3 verbindet. Bevorzugt ist dabei die Leitung 4 im Zylinderkopf 5 der beiden Zylinder 2 und 3 integriert. Die Kolben 6 und 7 bewegen sich zueinander phasenverschoben, wobei der als Ladekolben wirkende Kolben 6 im Zylinder 2 (Ladezylinder) dem Verbrennungskolben 7 im Zylinder 3 (Verbrennungszylinder) um einen Winkel zwischen und 30 und 90° nacheilt.

Unterhalb der Kolben 6 bzw. 7 befinden sich zwei, vorzugsweise voneinander getrennte Kurbelgehäuse 8 und 9, die über durch die Kolben 6 und 7 gesteuerte Ansaugschlitze 10 bzw. 11 mit Frischluft füllbar sind. Dabei sind die Ansaugschlitze 10 und 11 von den Kolben freigegeben, wenn sich diese durch den oberen Totpunkt bewegen.

Beim in den Fig. 1 und 2 gezeigten Ausführungsbeispiel sind die Kolben 6 und 7 über Pleuelstangen 12 und 13 mit einer Kurbelwelle 14, die sich durch beide Kurbelkammern 8 und 9 erstreckt, gekuppelt.

Die Kurbelkammern 8 und 9 stehen mit einer als Leitung ausgebildeten Ladekammer 15 in Verbindung, wobei im Bereich der Mündung der Leitung 15 in die Kurbelkammern 8 und 9 jeweils Einwegventile 16 bzw. 17 vorgesehen sind, die den Übertritt von Frischluft aus den Kurbelkammern 8 und 9 in die Ladekammer 15 gestatten. Auf diese Weise kann Frischluft auch während der Bewegung der Kolben 6 und 7 von deren oberen Totpunkten zu deren unteren Totpunkten über die Ventile 16 und 17 nacheinander in die als Leitung ausgebildete Ladekammer 15 gelangen und von dort über den Ladeschlitz 18 in den mit dem kälteren Ende des Regenerators 1 verbundenen Ladezylinders 2 gedrückt werden. Dies geschieht, wenn sich der Ladekolben 6 um seinen unteren Totpunkt bewegt und die Ladeschlitze 18 bzw. die Auslaßschlitze 19 freigestellt sind.

Auf diese Weise erfolgt einerseits der Ladungswechsel im Ladezylinder 2 und anderseits wird ein Teil des noch im Verbrennungszylinder 3 befindlichen, restlichen Abgases während der Bewegung des Kolbens 7 von seinem unteren Totpunkt in Richtung auf den oberen Totpunkt über den Regenerator 1 (unter Abgabe von Wärme an diesen) und über den Ladezylinder 2 verdrängt werden.

Es ist an dieser Stelle darauf hinzuweisen, daß an Stelle des vom Kolben 6 gesteuerten Auslaßschlitzes 19, bei dessen Anwesenheit eine Quer- oder Umkehrspülung im Ladezylinder stattfindet, ein Auslaßventil am Zylinderkopf des Ladezylinders 2 vorgesehen sein kann. Ein derartiges Ventil 20 ist in Fig. 1 strichliert angedeutet und erlaubt eine Gleichstromspülung des Ladezylinders 2. Das Ventil 20, das alternativ zum Auslaßschlitz 19 vorgesehen ist, wird bevorzugt am Bereich des kalten Endes des Regenerators 1 vorgesehen.

Während der Kompressionsphase in den Zylindern 2 und 3, d. h. während der Bewegung der Kolben 6 und 7 nach oben, wird Brennstoff über eine Einspritzdüse 21 in das im Verbrennungszylinder 3 befindliche heiße Restgas der vorausgegangenen Verbrennung eingespritzt. Dabei entsteht je nach dem Luftüberschuß im Restgas und der Menge des eingespritzen Brennstoffes ein sehr sauerstoffarmes, gasförmiges Abgas-Brennstoff-Gemisch. Dieses Abgas-Brennstoff-Gemisch, das im Verbrennungszylinder 3 enthalten ist, wird aus dem Ladezylinder 2 durch den sich seinem oberen Totpunkt nähernden Ladekolben 6 mit Frischluft gefüllt, wobei die Frischluft im Regenerator 1 aufgeheizt wird. Diese Frischluft kann ggf. unterstützt durch eine Zündung 22 (Zündkerze) mit dem Abgas-Brennstoff-Gemisch im Verbrennungszylinder 3 reagieren und verbrennt, während sich der Kolben 7 im Verbrennungszylinder 3 nach unten bewegt.

Während der Bewegung des Kolbens 7 im Verbrennungszylinder 3 im Bereich dessen unteren Totpunktes kann eine Nachexpansion der im Verbrennungszylinder 3 enthaltenen Abgase über den Regenerator unter gleichzeitiger Abgabe von Wärme an diesen in den Ladezylinder 2 stattfinden. Diese Nachexpansion erfolgt solange, bis nach Freistellung der Auslaßschlitze 19 (oder Öffnung des Auslaßventiles 20) die nächste Ladungswechselphase beginnen kann.

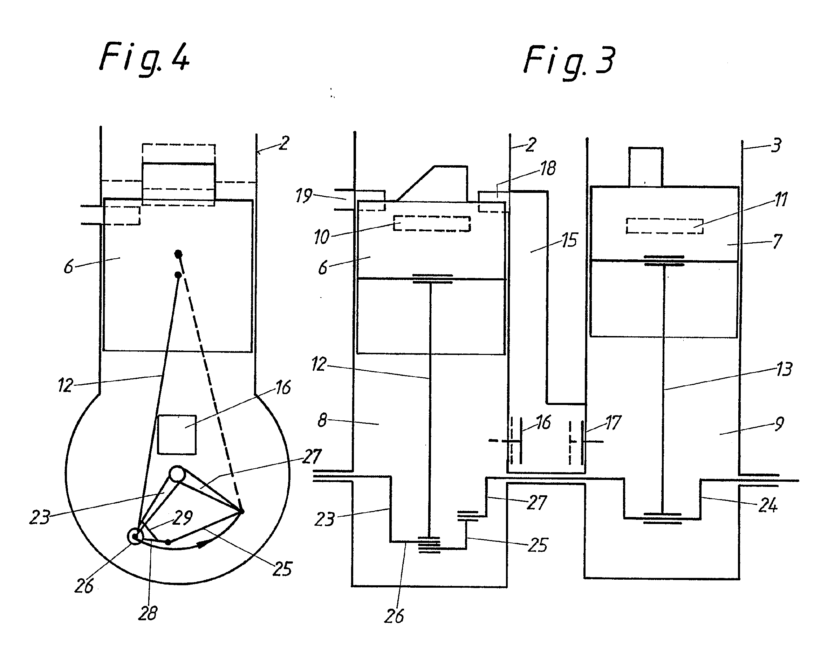

Im Unterschied zu der in den Fig. 1 und 2 gezeigten Ausführungsform, bei welcher der Winkel der Phasenverschiebung zwischen dem Verbrennungszylinder und dem nacheilenden Ladezylinder 6 konstant ist, ändert sich dieser Winkel bei der Ausführung der Verbrennungskraftmaschine nach den Fig. 3 und 4 während des Hubes der Kolben 6 und 7 periodisch. Dabei ist vorgesehen, daß sich der Vorlaufwinkel des Verbrennungskolbens 7 im Verbrennungszylinder 3 von einem kleineren Wert im Bereich des oberen Totpunktes des Verbrennungskolbens 7 zu einem größeren Phasenwinkel im Bereich des unteren Totpunktes des Verbrennungskolbens 7 ändert. Durch diese Wahl der Änderung des Vorlaufwinkels des Verbrennungskolbens 7 gegenüber dem Ladekolben 6 wird im Bereich des oberen Totpunktes des Verbrennungskolbens 7 eine höhere Kompression und im Bereich des unteren Totpunktes des Verbrennungskolben 7 eine bessere Nachexpansion gewährleistet. Die Art und Weise, wie diese Änderung des Vorlaufwinkels des Verbrennungskolbens 7 gegenüber dem Ladekolben 6 erreicht wird, ist nicht primär für die Erfindung wesentlich.

Bei dem in den Fig. 3 und 4 gezeigten Ausführungsbeispiel wird die Variation des Nachlaufwinkels des Ladekolbens 6 im Ladezylinder 1, bezogen auf den Verbrennungskolben 7 im Zylinder 3 dadurch erreicht, daß die Kolben 6 bzw. 7 über ihre Pleuelstangen 12 bzw. 13 mit getrennten Kurbelwellen 23 bzw. 24 gekuppelt sind. Im gezeigten Ausführungsbeispiel erfolgt die Steuerung des Nachlaufwinkels der Kurbelwelle 23 der Kolbens 6 im Ladezylinder 2 in Abhängigkeit des Winkels der Kurbelwelle 24 des Kolbens 7 im Verbrennungszylinder 3 mittels einer Schubstange 25, die zum Kurbelzapfen 26 der Kurbelwelle 23 des Kolbens 6 exzentrisch an dessen Pleuelstange 12 drehbar angreift und die von der Kurbelwelle 24 über einen an ihr vorgesehenen Arm 27, der in die Kurbelkammer 8 ragt, angetrieben wird. Die exzentrische Anlenkung der Schubstange 25 am Kurbelzapfen 26 der Kurbelwelle 12 erfolgt über einen kurzen Hilfsarm 28, der in der Pleuelstange 12 integriert ist.

Je nach der geometrischen Auslegung dieses Kupplungsgestänges kann der Nachlaufwinkel der Kurbelwelle 23 des Kolbens 6 gegenüber der Kurbelwelle 24 des Kolbens 7 auf den gewünschten Wert eingestellt werden und beträgt in der Nähe des oberen Totpunktes der Kolben 6 und 7 etwa 45° und in der Nähe des unteren Totpunktes derselben etwa 90°.

Patentansprüche:

1. Regenerativ arbeitende Zweitakthubkolbenbrennkraftmaschine mit wenigstens einem Verbrennungszylinder (Arbeitszylinder) (3), dem eine Zündvorrichtung und eine Anordnung zum Einspritzen von Kraftstoff zugeordnet ist und der über eine Verbindungsleitung (4), in der ein Regenerator vorgesehen, mit einem Ladezylinder (2), verbunden ist, wobei die Kolben des Verbrennungszylinders (3) und des Ladezylinders (2) zueinander um einen Winkel zwischen 30 und 90° phasenversetzt arbeiten, wobei der Kolben des Verbrennungszylinders (3) dem Kolben des Ladezylinders (2) voreilt, dadurch gekennzeichnet, daß der Ladezylinder (2) über die Verbindungsleitung (4), in welcher der Regenerator (1) vorgesehen ist, in je- der Stellung der Kolben (6, 7) mit dem Verbrennungszylinder (3) verbunden ist, daß die Kurbelgehäuse (8, 9) von Ladezylinder (2) und Verbrennungszylinder (3) über von den Kolben (6, 7) gesteuerte Ansaugschlitze (10, 11) beim Durchgang der Kolben (6, 7) durch deren oberen Totpunkt mit Frischluft füllbar sind, daß beide Kurbelgehäuse (8, 9) in den Ladezylinder (2) oberhalb des Kolbens (6) in diesem entleerbar sind und daß im Ladezylinder (2) vom Kolben (6) in diesem gesteuerte Auslaßschlitze (19) und/oder im Zylinderkopf (5) des Ladezylinders (2) ein Auslaßventil (20) für das Ausstoßen der Abgase vorgesehen sind.

2. Brennkraftmaschine nach Anspruch 1, dadurch gekennzeichnet, daß sich der Winkel der Phasenversetzung zwischen den im Ladezylinder (2) und Verbrennungszylinder (3) angeordneten Kolben (6, 7) während des Hubes derselben ändert und im Bereich des oberen Totpunktes des Kolbens (7) im Verbrennungszylinder (3) kleiner, im unteren Totpunkt des Kolbens (7) im Verbrennungszylinder (3) größer ist.

3. Brennkraftmaschine nach Anspruch 2, dadurch gekennzeichnet, daß der Winkel der Phasenversetzung im Bereich des oberen Totpunktes des Kolbens (7) im Verbrennungszylinder (3) etwa 45° und im Bereich des unteren Totpunktes etwa 90° beträgt.

4. Brennkraftmaschine nach Anspruch 2 oder 3, dadurch gekennzeichnet, daß die Kurbelwelle (24) des Verbrennungszylinders (3) mit der Kurbelwelle (23) des Ladezylinders (2) über ein Hebelgestänge (27, 25, 28) verbunden ist.

5. Brennkraftmaschine nach Anspruch 4, dadurch gekennzeichnet, daß das die Kurbelwellen (23, 24) von Verbrennungszylinder (3) und Ladezylinder (2) verbindende Hebelgestänge eine Schubstange (25) umfaßt, die exzentrisch zum Kurbelzapfen (26) der Kurbelwelle (23) des Ladekolbens (6) an dessen Pleuelstange (12) drehbar angelenkt ist, wobei der Anlenkpunkt der Schubstange (25) vom Kurbelzapfen (26) der Kurbelwelle (23) des Ladezylinders (2) einen Abstand aufweist.

6. Brennkraftmaschine nach einem der Ansprüche 1 bis 5, dadurch gekennzeichnet, daß die Kurbelgehäuse (8, 9) vom Ladezylinder (2) und Verbrennungszylinder (3) voneinander pneumatisch getrennte Kurbelkammern (8, 9) sind.

7. Brennkraftmaschine nach einem der Ansprüche 1 bis 6, dadurch gekennzeichnet, daß in der Mündung einer Leitung (15) zwischen den Kurbelkammern (8, 9) und dem Ladezylinder (2) den Durchtritt von Luft in die Leitung freigebende Einwegventile (16, 17) vorgesehen sind.

8. Brennkraftmaschine nach einem der Ansprüche 1 bis 7, dadurch gekennzeichnet, daß das Auslaßventil (20) in der Verbindungsleitung (4) im Bereich des kalten Endes des Regenerators (1) vorgesehen ist.

9. Brennkraftmaschine nach einem der Ansprüche 1 bis 8, dadurch gekennzeichnet, daß dem Regenerator (1) ein Katalysator zugeordnet ist, der zur Verringerung des Schadstoffgehaltes in den Abgasen dient.

10. Brennkraftmaschine nach einem der Ansprüche 1 bis 9, dadurch gekennzeichnet, daß am Kolben (6) des Ladezylinders (2), vorzugsweise zwischen der Mündung der Lufteinlaßschlitze einerseits und den Auslaßschlitzen anderseits eine Nase (29) vorgesehen ist.

11. Brennkraftmaschine nach einem der Ansprüche 1 bis 10, dadurch gekennzeichnet, daß der Regenerator (1) in einer den Zylinderkopf (15) von Ladezylinder (2) und Verbrennungszylinder (3) verbindenden Leitung (4) vorgesehen ist.

12. Brennkraftmaschine nach Anspruch 11, dadurch gekennzeichnet, daß die den Regenerator (1) aufnehmende Leitung (4) in den Zylinderkopf (5) integriert ist.

Fig.1

Fig.2

Fig. 4

Fig. 3

)) Europäisches
   Patentamt

**EUROPÄISCHER RECHERCHENBERICHT**

0239560

Nummer der Anmeldung

EP   87  89  0044

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | US-A-4 133 172  (CATALDO)<br>* Zusammenfassung; Spalte 2, Zeilen 24-47; Figur 1 *<br>--- | 1 | F 02 G    3/02<br>F 02 B   25/12<br>F 02 B   33/22<br>F 02 B   29/00 |
| A | FR-A- 430 007  (RICHARDSON)<br>* Insgesamt *<br>--- | 1 | |
| A | GB-A- 151 683  (SYMINGTON MacDONALD)<br>* Seite 3, Zeilen 8-126; Seite 4, Zeilen 1-9; Figuren 1-3 *<br>--- | 1 | |
| A | DE-A-2 703 316  (RENNER, EWALD)<br>* Anspruch 1; Seite 6; Figur 1 *<br>--- | 1 | |
| A | US-A-3 180 078  (J. LISTON)<br>--- | | RECHERCHIERTE SACHGEBIETE (Int. Cl.4) |
| A | US-A-3 237 847  (F. WILSON)<br>--- | | F 02 G<br>F 02 B<br>F 02 D<br>F 01 N<br>F 02 M |
| A | FR-A- 317 643<br>(BOUDREAUX-MICHAUX)<br>----- | | |

Der vorliegende Recherchenbericht wurde für alle Patentansprüche erstellt.

| Recherchenort | Abschlußdatum der Recherche | Prüfer |
|---|---|---|
| DEN HAAG | 29-06-1987 | ERNST J.L. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82